# EUROPÄISCHE PATENTSCHRIFT

(11) **EP 3 259 381 B1**
(45) Veröffentlichungstag und Bekanntmachung des Hinweises auf die Patenterteilung: **27.05.2020**
(21) Anmeldenummer: 16713410.5
(22) Anmeldetag: 30.03.2016
(51) Int. Cl.: C23C 24/04, B22F 3/105, B33Y 10/00, B33Y 30/00, B22D 23/00, B22F 3/115, B29C 64/153

(54) **VERFAHREN ZUM HERSTELLEN EINES BAUTEILS DURCH THERMISCHES SPRITZEN UND ANLAGE ZUM HERSTELLEN EINES BAUTEILS MIT EINER VORRICHTUNG ZUM THERMISCHEN SPRITZEN**
METHOD FOR MANUFACTURING A COMPONENT BY THERMAL SPRAYING AND INSTALLATION FOR MANUFACTURING A COMPONENT WITH A DEVICE FOR THERMAL SPRAYING
PROCÉDÉ POUR LA FABRICATION D'UN ÉLÉMENT PAR PULVÉRISATION THERMIQUE ET INSTALLATION POUR LA FABRICATION D'UN ÉLÉMENT AU MOYEN D'UN DISPOSITIF POUR LA PULVÉRISATION THERMIQUE

(30) Priorität: 16.04.2015 DE 102015206892
(43) Veröffentlichungstag der Anmeldung: 27.12.2017
(73) Patentinhaber: Siemens Aktiengesellschaft, 80333 München (DE)
(72) Erfinder: HOFACKER, Oliver, 14199 Berlin (DE); KRÜGER, Ursus, 14089 Berlin (DE)
(86) Internationale Anmeldenummer: PCT/EP2016/056886
(87) Internationale Veröffentlichungsnummer: WO 2016/165938

(56) Entgegenhaltungen:
- EP-A1- 0 490 546
- WO-A1-2004/091907
- DE-A1-102009 049 707
- US-A1- 2002 069 996

## Beschreibung

Die Erfindung betrifft ein Verfahren zum Herstellen eines Bauteils, bei dem das Bauteil durch thermisches Spritzen mit einem Baumaterial führenden Beschichtungsstrahl aufgebracht wird. Das Baumaterial, das bei thermischen Spritzverfahren zum Einsatz kommt, ist gewöhnlich ein Pulver. Dieses wird durch das thermische Spritzverfahren mit Energie beaufschlagt, die dann zur Abscheidung der Partikel zur Verfügung steht. Beim thermischen Spritzen wird ein Beschichtungsstrahl erzeugt, mit dem das Baumaterial zum zu beschichtenden Bauteil transportiert wird.

Weiterhin betrifft die Erfindung eine Anlage zum Herstellen eines Bauteils. Diese Anlage weist eine Vorrichtung für ein thermisches Spritzen von Baumaterial auf. Als Vorrichtung zum thermischen Spritzen können beispielsweise eine Vorrichtung zum Hochgeschwindigkeits-Flammspritzen oder insbesondere auch zum Kaltgasspritzen Verwendung finden. Diese Verfahren werden derzeit hauptsächlich zum Herstellen von Schichten auf Bauteilen verwendet.

Das Kaltgasspritzen ist ein an sich bekanntes Verfahren, bei dem für die Beschichtung vorgesehene Partikel mittels einer konvergent-divergenten Düse vorzugsweise auf Überschallgeschwindigkeit beschleunigt werden, damit diese aufgrund ihrer eingeprägten kinetischen Energie auf der zu beschichtenden Oberfläche haften bleiben. Hierbei wird die kinetische Energie der Teilchen genutzt, welche zu einer plastischen Verformung derselben führt, wobei die Beschichtungspartikel beim Auftreffen lediglich an ihrer Oberfläche aufgeschmolzen werden. Deshalb wird dieses Verfahren im Vergleich zu anderen thermischen Spritzverfahren als Kaltgasspritzen bezeichnet, weil es bei vergleichsweise tiefen Temperaturen durchgeführt wird, bei denen die Beschichtungspartikel im Wesentlichen festbleiben. Vorzugsweise wird zum Kaltgasspritzen, welches auch als kinetisches Spritzen bezeichnet wird, eine Kaltgas-spritzanlage verwendet, die eine Gasheizeinrichtung zum Erhitzen eines Gases aufweist. An die Gasheizeinrichtung wird eine Stagnationskammer angeschlossen, die ausgangsseitig mit der konvergent-divergenten Düse, vorzugsweise einer Lavaldüse verbunden wird. Konvergent-divergente Düsen weisen einen zusammenlaufenden Teilabschnitt sowie einen sich aufweitenden Teilabschnitt auf, die durch einen Düsenhals verbunden sind. Die konvergent-divergente Düse erzeugt ausgangsseitig einen Pulverstrahl in Form eines Gasstroms mit darin befindlichen Partikeln mit hoher Geschwindigkeit, vorzugsweise Überschallgeschwindigkeit.

Andererseits besteht der Wunsch, Bauteile mit urformenden Verfahren gleichzeitig mit ausreichend hoher Maßhaltigkeit und unter Ausbildung vertretbarer Eigenspannungen im Bauteil herzustellen. Dieses Problem ist bisher nur für große Stückzahlen befriedigend gelöst. Beispielsweise können derartige Bauteile in Gusstechnik hergestellt werden. Bei Einzelanfertigungen oder kleinen Serien lohnt sich allerdings nicht die Herstellung einer geeigneten Form. Für die generative Fertigung von Bauteilen wird bisher Verfahren des Additive Manufacturing, beispielsweise das Laserschmelzen gemäß DE 10 2006 014 835 A1, genutzt. Insbesondere filigrane Strukturen mit einem geringen Volumen lassen sich auf diesem Wege wirtschaftlich herstellen. Für die Herstellung massiver dreidimensionaler Strukturen wird bisher z.B. das Kaltgasspritzen verwendet. Hier ist allerdings bei hohen Anforderungen an die Maßhaltigkeit eine Nachbearbeitung der Oberflächen notwendig. Bauteile können auch durch Anwendung beider Verfahren hergestellt werden, wie sich der DE 10 2009 049 707 A1 entnehmen lässt.

Gemäß der WO 2004/091907 A1 ist es bekannt, dass eine Form für ein Bauteil unter Zuhilfenahme eines Modells hergestellt werden kann. Das Modell stellt eine Abbildung des herzustellenden Bauteils dar und wird mit einer metallichen Zwischenschicht versehen, auf der die Form aus einem keramischen Werkstoff hergestellt werden kann. Ein anderes Verfahren gemäß der US 2002/0069996 A1 sieht vor, dass eine Form, die unter Zuhilfenahme eines Modells in der oben beschriebenen Weise hergestellt wurde mittels eines thermischen Spritzverfahrens mit dem Material des herzustellenden Bauteils ausgefüllt werden kann.

Gemäß der EP 490 546 A1 ist beschrieben, dass ein Bauteil in mehreren Lagen auch dadurch hergestellt werden kann, indem Masken mit einem Spritzverfahren ausgefüllt werden. Jede Maske bildet dabei eine Lage des herzustellenden Bauteils ab, so dass das Bauteil durch eine sukzessive Schichtung und jeweilige Ausfüllung der Masken hergestellt werden kann.

Die Aufgabe der Erfindung besteht darin, ein Verfahren anzugeben, mit dem generativ Bauteile mit folgenden Eigenschaften hergestellt werden können. Einerseits sollen diese Bauteile die hohe Maßhaltigkeit von mittels Additive Manufacturing, beispielsweise Laserschmelzen, hergestellten Bauteilen aufweisen. Andererseits sollen sich diese Bauteile mit den hohen Aufbaugeschwindigkeiten herstellen lassen, welche mit thermischen Spritzverfahren, beispielsweise mit dem Kaltgasspritzen, erreicht werden.

Diese Aufgabe wird mit dem eingangs angegebenen Verfahren erfindungsgemäß dadurch gelöst, dass in dem Verfahren mindestens zwei Teilschritte durchgeführt werden. In einem ersten Teilschritt wird auf einer Bauplattform, die Teil der Herstellungsanlage ist, ein Formwerkzeug für das herzustellende Bauteil durch ein generatives Verfahren auf der Grundlage von das Formwerkzeug beschreibenden Daten lagenweise erzeugt. Die das Formwerkzeug beschreibenden Daten sind gewöhnlich ein so genannter CAD-Datensatz, der die dreidimensionale Struktur des Formwerkzeugs wiedergibt und zwecks eines lagenweisen Herstellens in die Geometrie der Lagen berücksichtigender Scheiben zerlegt wird. Mithilfe dieser Daten kann Lage um Lage des Formwerkzeuges hergestellt werden. In einem nachfolgenden Teilschritt wird das Formwerkzeug durch das thermische Spritzen mit dem Baumaterial aufgefüllt. Hierbei kann vorteilhaft der Nachteil von thermischen Spritzverfahren bei der Herstellung von massiven Bauteilen vermieden werden, dass eine Maßhaltigkeit der erzeugten Bauteile nur mit vergleichsweise großen Toleranzen eingehalten werden kann. Außerdem wird es auch möglich, dass Bauteile hergestellt werden können, deren äußere Begrenzung senkrecht zur Ausrichtung des Beschichtungsstrahls ausgerichtet sind. Hier ergibt sich aufgrund der Verfahrensgrenzen des thermischen Spritzens nach dem Stand der Technik, insbesondere des Kaltgasspritzens, dass beim Freiformen von Bauteilen mittels thermischen Spritzens nur Seitenflanken hergestellt werden können, die zum Inneren des Bauteils geneigt sind. Das Formwerkzeug ermöglicht vorteilhaft jedoch, dass der Beschichtungsstrahl die Form auch bei höheren Auftragsdicken immer bis zu einer Wandfläche des Formwerkzeuges ausfüllen kann und sich somit beliebige Strukturen (z.B. mit zum Beschichtungsstahl parallel ausgerichteten Wänden) mit dem thermischen Spritzen herstellen lassen.

Vorteilhaft ist der Materialaufwand für das Formwerkzeug minimal. Dieses kann nämlich in Form von Gittern (Fachwerken) hergestellt werden, wobei nur die Wandflächen der Form geschlossen ausgeführt sein müssen, damit die Form des durch das thermische Spritzen herzustellenden Bauteils eindeutig definiert ist.

Gemäß einer vorteilhaften Ausgestaltung der Erfindung ist vorgesehen, dass das Herstellen des Bauteils durch ein Kaltgasspritzen erfolgt. Dieses Verfahren hat den Vorteil, dass vergleichsweise hohe Auftragsraten erreicht werden können. Außerdem lassen sich auch thermisch empfindliche Baumaterialien verarbeiten, da die Partikel des Baumaterials nicht aufgeschmolzen werden, sondern aufgrund ihrer kinetischen Energie haften bleiben. Auch die thermische Belastung des Formwerkzeuges kann damit vorteilhaft gering gehalten werden.

Gemäß einer anderen vorteilhaften Ausgestaltung der Erfindung ist vorgesehen, dass zum Herstellen des Formwerkzeuges ein selektives Laserschmelzen und/oder ein selektives Lasersintern und/oder ein selektives Elektronenstrahl-Schmelzen als generatives Verfahren zum Einsatz kommen. Hierbei handelt es sich um generative Fertigungsverfahren, bei denen das Formwerkzeug in einem Pulverbett hergestellt wird, welches Lage für Lage auf die Bauplattform aufgebracht wird. Hierbei ist eine hochgenaue Fertigung möglich, wobei sich vorrangig metallische Werkstoffe durch die genannten generativen Fertigungsverfahren abscheiden lassen. Diese wiederstehen auch einer thermischen Belastung des nachfolgenden thermischen Spritzens. Selbst bei einer Anwendung des Kaltgasspritzens müssen die Partikel des Baumaterials nämlich in Abhängigkeit des gewählten Werkstoffes vorgewärmt werden, wobei auch das Auftreffen der Partikel auf dem in Entstehung befindlichen Bauteil zu einer Erwärmung führt. Bei geringerer thermischer Belastung ist es auch möglich, Kunststoffe für das Formwerkzeug zu verwenden. Diese können beispielsweise mittels eines 3d-Druckverfahrens lagenweise aufgebaut werden, ohne dass die Erzeugung eines Pulverbettes notwendig ist.

Es wird als mit anderen Worten erfindungsgemäß vorgesehen, dass in einer Prozesskammer sowohl die notwendigen Vorrichtungen für das Additive Manufacturing (beispielsweise das Laserschmelzen) als auch die notendigen Vorrichtungen für ein Kaltgasspritzen eingebaut werden. Damit kann in der Prozesskammer sowohl ein Laserschmelzen als auch ein Kaltgasspritzen stattfinden.

Die genannte Aufgabe wird erfindungsgemäß auch durch eine eingangs angegebene Anlage zum Herstellen von Bauteilen gelöst, indem eine Bauplattform für das herzustellende Bauteil vorgesehen ist. Neben der Vorrichtung für das thermische Spritzen von Baumaterial, welche in die Anlage integriert ist, ist außerdem eine Vorrichtung für ein generatives Verfahren zum lagenweisen Herstellen von Objekten auf der Grundlage von diese Objekte beschreibenden Daten vorgesehen. Die Vorrichtung für das thermische Spritzen ist vorzugsweise für die vorstehend bereits erläuterten Spritzverfahren vorbereitet, während die Vorrichtung für das generative Verfahren ebenfalls die bereits erwähnten Anlagen umfasst. Hierbei handelt es sich insbesondere um eine Vorrichtung zum Kaltgasspritzen für das thermische Spritzen und um eine Vorrichtung zum selektiven Laserschmelzen und/oder zum selektiven Lasersintern und/oder zum Elektronenstrahl schmelzen für das generative Fertigungsverfahren.

Gemäß einer Ausgestaltung der erfindungsgemäßen Anlage ist vorgesehen, dass die Bauplattform in einem Lager derart beweglich gelagert ist, dass die Bauplattform aus der horizontalen Position in eine schräge Position schwenkbar ist. Genauso kann gemäß einer anderen Ausgestaltung der Erfindung vorgesehen werden, dass die Vorrichtung für das thermische Spritzen in einem Lager derart beweglich gelagert ist, dass diese Vorrichtung axial verschiebbar und schwenkbar ist. Die schwenkbare Lagerung der beiden genannten Komponenten hat den Vorteil, dass der Spritzwinkel des Beschichtungsstrahls gegenüber eines auf der zu beschichtenden Oberfläche am Auftreffpunkt des Beschichtungsstrahls gefällten Lotes (Normalen) verändert werden kann. Die Summe aller jener Spritzwinkel, bei denen sich das Baumaterial abscheiden lässt, bildet den so genannten Spritzkegel, wobei dessen Mantelfläche die Grenzen angibt, innerhalb derer bei unterschiedlichen Spritzwinkeln eine Abscheidung des Beschichtungsmaterials möglich ist.

Durch Schwenken der Vorrichtung zum thermischen Spritzen und/oder der Bauplattform kann somit gezielt beeinflusst werden, ob sich das im Beschichtungsstrahl befindliche Beschichtungsmaterial auf einer Unterlage abscheiden lässt oder nicht. Vorteilhaft kann dies insbesondere gezielt genutzt werden, damit eine Haftung des Beschichtungsmaterials an den Wandflächen des Formwerkzeuges verringert wird oder sogar vollständig ausbleibt. Gleichzeitig kann der Spritzwinkel bezüglich bereits in der Form abgeschiedenen Materials bei tangentialer Ausrichtung des Beschichtungsstrahls an der Wandfläche des Formwerkzeuges so ausgerichtet werden, dass die Abscheidung des Schichtmaterials auf dem in Entstehung befindlichen Bauteil ermöglicht wird. Dies hat die bereits beschriebenen Vorteile bei der Entformung des fertiggestellten Bauteiles.

Erfindungsgemäß wird also mit anderen Worten ein Verfahren vorgeschlagen, bei dem sowohl insbesondere das Kaltgasspritzen als auch insbesondere das Laserschmelzen zur Herstellung des Bauteils verwendet werden. Das Laserschmelzen erfolgt erfindungsgemäß nur, um eine Form für das Bauteil herzustellen.

Gemäß einer Ausgestaltung der Erfindung ist vorgesehen, dass bei dem Herstellen des Bauteils das generative Erzeugen des Formwerkzeugs abwechselnd mit dem Füllen des Formwerkzeugs mit dem Baumaterial durchgeführt wird. Das Formwerkzeug kann also in mehreren Schritten abwechselnd mit dem thermischen Spritzen (Kaltgasspritzen) hergestellt werden. Das Kaltgasspritzen dient dem Auffüllen der Form, so dass ein schneller Materialauftrag bei gleichzeitig geringer Ausbildung von Eigenspannungen möglich ist möglich ist. So können vorteilhaft auch Teile mit Hinterschneidungen gut hergestellt werden, indem die Formteile, die Hinterschneidungen aufweisen, erst hergestellt werden, wenn die Hinterschneidungen ausbildende Bereiche des Bauteils bereits durch das thermische Spritzen hergestellt wurden.

Um das Entformen zu erleichtern, sollte der Kaltgasstrahl, soweit möglich, tangential an der Forminnenseite entlanggeführt werden. Hierbei kommt nur eine geringe Haftung oder sogar gar keine Haftung zwischen Form und Bauteil zustande, was das Entformen erleichtert.

Ein Entformen des Bauteils erfolgt bei Vorliegen von Hinterschneidungen durch Zerstörung der Form (sogenannte verlorene Form). Diese kann mechanisch zerstört werden oder auch beispielsweise durch Auflösen auf elektrochemischem Wege, wenn das Material der Form unedler ist als das Material des Bauteils. Auch die Kombination beider Zerstörungsprinzipien ist möglich.

Gemäß einer Ausgestaltung der Erfindung ist vorgesehen, dass das Formwerkzeug mit einer Versteifungsstruktur hergestellt wird, die aus Streben besteht. Besonders vorteilhaft ist es, wenn die Streben ein Fachwerk bilden. Hierdurch lassen sich bei geringem Materialaufwand mit kurzer Bauzeit stabile Formwerkzeuge herstellen.

Das erfindungsgemäße Verfahren und die hierfür geeignete Vorrichtung zum kombinierten Kaltgasspritzen und Laserschmelzen haben den Vorteil, dass die Vorzüge beider Verfahren genutzt werden können. Der Formaufbau erfolgt mittels Additive Manufacturing und kann insofern mit hoher Maßhaltigkeit durchgeführt werden. Um die Form leicht zu zerstören, kann diese filigran mit einem gitterartigen Tragwerk gestützt werden, so dass nur die Innenfläche massiv ausgebildet werden muss. Dies verkürzt vorteilhabt die Fertigungszeit und vermindert den Verbrauch an Material für die Form. Das Bauteil selbst kann durch Kaltgasspritzen hergestellt werden. Zumindest die massiven Strukturen des Bauteils lassen sich auf diese Wege kostengünstiger und mit geringeren Eigenspannungen herstellen, als mit einem generativen Fertigungsverfahren.

Das Additive Manufacturing oder generative Fertigungsverfahren (insbesondere Laserschmelzen) kann selbstverständlich auch verwendet werden, um bestimmte Teile des Bauteils zu fertigen. Dies lohnt sich beispielsweise bei Innenstrukturen, die in dem Bauteil durch eine Stützstruktur in Form eines Tragwerks stabilisiert werden sollen. Eine andere Anwendung des generativen Fertigungsverfahrens stellt die Herstellung von Teilvolumen des Bauteils mit komplexer Geometrie dar, wo die Zugänglichkeit für den Beschichtungsstrahl nur bei einem häufigen Wechsel der Fertigungsschritte des generativen Aufbaus des Formwerkzeugs und der Herstellung des Bauteils gewährleistet werden könnte.

Weitere Einzelheiten der Erfindung werden im Folgenden anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben. Es zeigen:
- Figur 1: ein Ausführungsbeispiel der erfindungsgemäßen Anlage schematisch als Schnittdarstellung und
- Figur 2 bis 11: Verfahrensschritte eines Ausführungsbeispiels des erfindungsgemäßen Verfahrens.

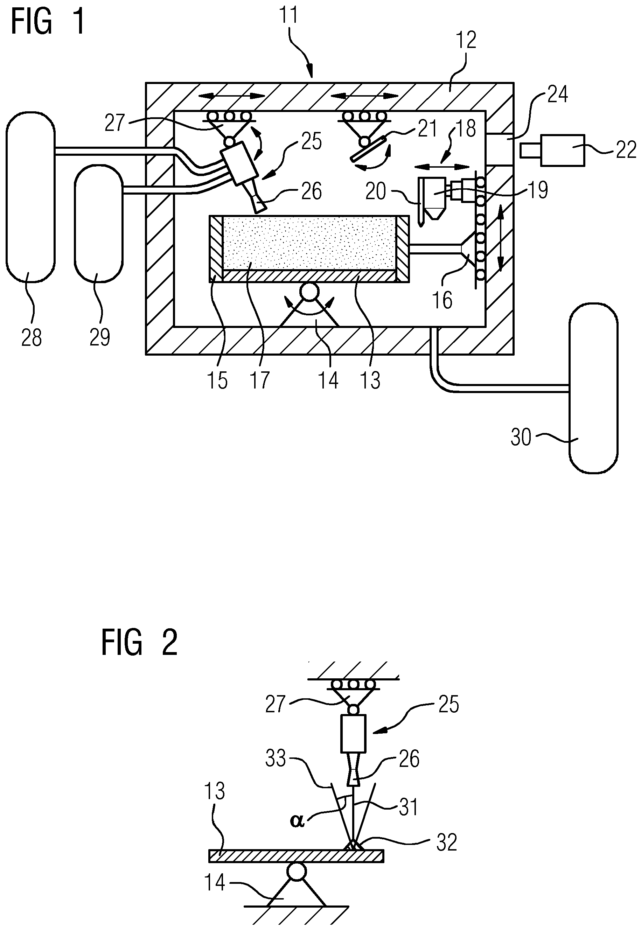

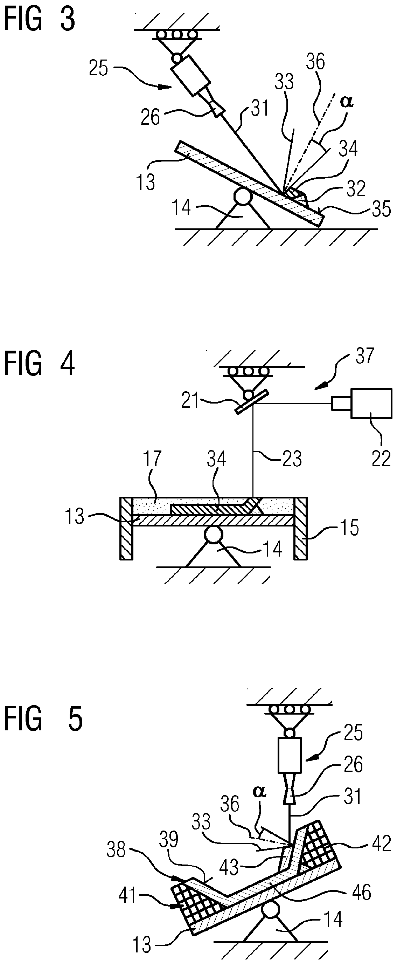

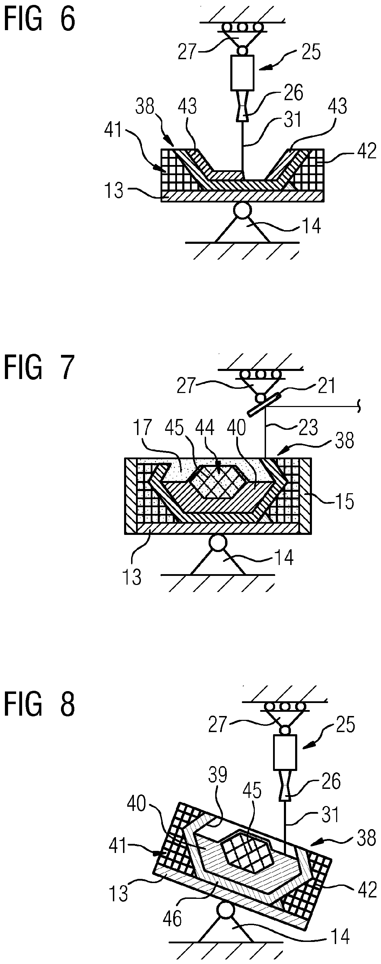

Eine Anlage 11 gemäß Figur 1 weist eine Prozesskammer auf, in der, wie im Folgenden näher erläutert wird, ein thermisches Spritzen sowie eine generative Herstellung von Werkstücken in einem Pulverbett erfolgen kann. Zu diesem Zweck ist in der Anlage eine Bauplattform 13 vorgesehen, die schwenkbar auf einem Lager 14 angeordnet ist. Dies ermöglicht ein Schwenken der Bauplattform 13, so dass diese beim thermischen Spritzen geneigt werden kann (vergleiche Figuren 5 und 8). Die Bauplattform weist außerdem eine Seitenbegrenzung 15 auf, die vertikal in einem Lager 16 verschiebbar ist und auf diese Weise mit der Bauplattform 13 gemeinsam zur Aufnahme eines lagenweise aufzubringenden Pulverbettes 17 geeignet ist. An dem Lager 16 ist außerdem eine Dosiervorrichtung 18, aufweisend einen Pulverbehälter 19 und eine Rakel 20, vorgesehen, mit der das Pulver lagenweise auf dem Pulverbett 17 verteilt werden kann.

In der Prozesskammer 12 ist eine Umlenkoptik 21 vorgesehen, mit der ein durch einen Laser 22 erzeugter Laserstrahl 23 (vgl. beispielsweise Figur 4) auf das Pulverbett 17 gerichtet werden kann. Der Laser 22 befindet sich außerhalb der Prozesskammer 12 und tritt durch ein Fenster 24 in Prozesskammer 12 ein.

Weiterhin ist in der Prozesskammer 12 eine Vorrichtung 25 zum thermischen Spritzen vorgesehen, wobei es sich um eine Kaltgas-Spritzanlage mit einer konvergent-divergenten Düse 26 handelt. Die Vorrichtung wird durch ein Lager 27 gehalten, welches sowohl axial an der Decke verschiebbar aufgehängt ist als auch geschwenkt werden kann. Die Kaltgas-Spritzanlage weist einen Vorratsbehälter 28 für ein Prozessgas sowie einen Vorratsbehälter 29 für das nicht näher dargestellte Beschichtungsmaterial auf. Reste des Verfahrens, d. h. nicht abgeschiedenes Beschichtungsmaterial sowie Reste des Pulverbettes können in einen ebenfalls an die Prozesskammer 12 angeschlossenen Recyclingbehälter 30 eingebracht werden.

Die Fertigungsschritte gemäß den Figuren 2 bis 10 können mit einer Anlage 11 gemäß Figur 1 durchgeführt werden. Diese Anlage ist der Einfachheit halber in den Figuren 2 bis 10 nicht vollständig dargestellt, sondern immer nur diejenigen Komponenten der Anlage, die in dem jeweiligen Fertigungsschritt zum Einsatz kommen.

In Figur 2 ist die Bauplattform 13 waagerecht ausgerichtet. Mit der Vorrichtung 25 zum Kaltgasspritzen wird ein Beschichtungsstrahl 31 direkt auf die Oberfläche der Bauplattform 13 gerichtet. Hierdurch wird ein schmaler Grat 32 hergestellt. Da die Düse 26 der Vorrichtung 25 so ausgerichtet ist, dass der Beschichtungsstrahl 31 senkrecht auf die Bauplattform 32 trifft, liegt der Beschichtungsstrahl 31 gemäß Figur 2 genau in der Normalen eines angedeuteten Spritzkegels 33, wobei die Lage der Mantelfläche dieses Spritzkegels 33 durch einen Winkel α zur senkrecht auf der Bauplattform 13 stehenden Normalen definiert ist. Wenn der Beschichtungsstrahl innerhalb des Spritzkegels 33 liegt, ist eine Beschichtung der zu beschichtenden Oberfläche (hier der Bauplattform 13) möglich.

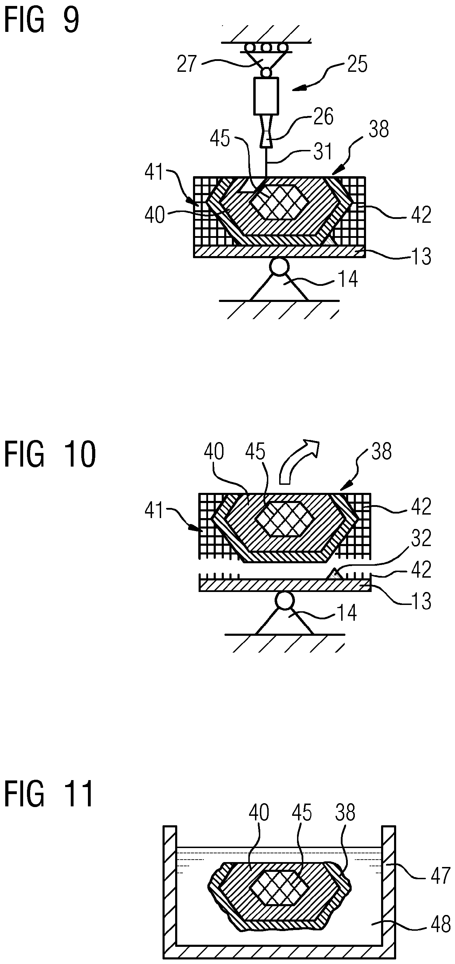

In Figur 3 dient der Grat 32 als Beschichtungsfläche für die Ausbildung einer Startschicht 34, die entlang der Bauplattform 13 aufgebaut wird. Zu erkennen ist außerdem, dass die Bauplattform 13 und die Vorrichtung 25 zum Kaltgasspritzen derart geneigt sind, dass die Oberfläche 35 der Bauplattform 13 nicht mehr haftend mit den Partikeln des Beschichtungsstrahls 31 beschichtet werden kann. Dies kann man daran erkennen, dass der Beschichtungsstrahl 31 außerhalb des Spritzkegels 33 liegt, der durch die Normale 36 auf der Oberfläche 35 definiert ist. Dies führt vorteilhaft dazu, dass das fertiggestellte Bauteil später leicht von der Bauplattform 13 getrennt werden kann (vgl. Figur 10).

In Figur 4 kommt eine Vorrichtung 37 zum Laserschmelzen zum Einsatz, die aus dem Laser 22 und der Umlenkoptik 21 besteht. Hiermit kann der Laserstrahl 23 auf die Bauplattform 13 gerichtet werden. Um dort ein Laserschmelzen durchführen zu können, wird die Bauplattform 13 mit der Seitenbegrenzung 15 versehen und in der durch die Bauplattform 13 und die Seitenbegrenzung 15 ausgebildeten wannenartigen Vertiefung ein Pulverbett 17 erzeugt. Mit dem Laserstrahl 23 wird das Pulverbett nun lagenweise aufgeschmolzen. Dies bedeutet, dass der Fertigungsschritt gemäß Figur 4 für nachfolgende (in Figur 4 nicht dargestellte) Lagen wiederholt wird. Dabei entsteht ein Formwerkzeug 38 (vgl. Figur 5) im Pulverbett 17.

In Figur 5 kann man erkennen, wie das Formwerkzeug 38 aufgebaut ist. Dieses weist einen massiven Teil auf, der eine Wandfläche 39 ausbildet, die die Kontur eines herzustellenden Bauteils 40 (vgl. Figur 10 und 11) vorgibt. Damit die Wandstärke der die Wandfläche 39 ausbildenden Struktur möglichst gering gewählt werden kann, ist außerdem ein Fachwerk 41 vorgesehen, welches aus einzelnen Streben 42 besteht. Hierdurch wird das Formwerkzeug 38 nach außen verstärkt. Das Fachwerk 41 stützt sich auf der Bauplattform 13 ab, so dass auftretende Kräfte hier eingeleitet werden können. Zu erkennen ist auch, dass die Startschicht 34 gemäß Figur 4 nun einen Teil des Formwerkzeugs 38 ausbildet und somit auch einen Teil der Wandfläche 39 zur Verfügung stellt.

In Figur 5 ist außerdem zu erkennen, wie eine Randschicht 43 des zu erzeugenden Bauteils mit der Vorrichtung 25 zum Kaltgasspritzen erzeugt wird. Hierzu wird die Bauplattform 13 und somit das ganze Formwerkzeug 38 und die Düse 26 derart geschwenkt, dass der Beschichtungsstrahl 31 tangential zur Wandfläche 39 ausgerichtet ist, so dass die Randschicht 43 dort nicht anhaftet. Hierzu reicht es, wie bereits erläutert, aus, dass der Beschichtungsstrahl 31 außerhalb des für die Wandfläche 39 geltenden Spritzkegels 33 liegt. Eine Randschicht 43 kann auch auf der gegenüberliegenden Seite der Form hergestellt werden, wie sich Figur 6 entnehmen lässt.

In Figur 6 ist außerdem zu erkennen, dass das Formwerkzeug mit der Vorrichtung zum Kaltgasspritzen 25 nachfolgend mit Material ausgefüllt werden kann. Auf diese Weise entsteht sukzessive das Bauteil 40, wobei die in Figur 6 noch zu erkennende Randschicht 43 integraler Bestandteil des Bauteils 40 wird. Dabei ist zu beachten, dass die Oberfläche der Randschicht 43 haftend mit den Partikeln des Beschichtungsstrahls 31 beschichtet wird. Dies ist wie bereits beschrieben durch Schwenken der Vorrichtung 25 sowie der Bauplattform 13 zu erreichen, wobei dies in Figur 6 nicht näher dargestellt ist. In Figur 6 ist der Beschichtungsstrahl 31 senkrecht ausgerichtet und die Bauplattform 13 waagerecht. Allerdings können diese beiden Komponenten auch so geschwenkt werden, dass eine Haftung des Bauteils am Boden der Form nicht erfolgt und die Oberfläche der Randschichten 43 jeweils so ausgerichtet sind, dass der Beschichtungsstrahl 31 im jeweiligen Spritzkegel liegt (nicht näher dargestellt, vgl. Figuren 2, 3 und 5).

In Figur 7 ist zu erkennen, dass das herzustellende Bauteil 40 erst zur Hälfte fertiggestellt wurde. Dies liegt daran, dass dieses Bauteil Hinterschneidungen aufweist und das Formwerkzeug 38 daher nicht in einem Fertigungsschritt durch das Kaltgasspritzen ausgefüllt werden könnte. Deswegen wird gemäß Figur 7 der Vorgang des thermischen Spritzens unterbrochen und erneut ein Pulverbett 17 auf dem Niveau des bisher hergestellten Bauteils erzeugt. Zum Erzeugen des Pulverbettes wird die Bauplattform 13 gewöhnlich wieder in eine waagerechte Lage gebracht. In diesem Fall ist die Oberfläche des Pulverbettes parallel zur Oberfläche 35 der Bauplattform ausgerichtet. Wenn die geometrischen Anforderungen des herzustellenden Bauteils dies erfordern, kann von einer waagerechten Ausrichtung jedoch auch abgewichen werden.

Gemäß Figur 7 ist dargestellt, wie mit dem Laserschmelzen das Formwerkzeug 38 ergänzt wird, wobei in Figur 8 das fertiggestellte Formwerkzeug 38 zu erkennen ist. Außerdem wird mittels des Laserschmelzens auch ein Teilvolumen 44 des Bauteils 40 im Inneren hergestellt. Es handelt sich hierbei um einen Hohlraum, der durch eine Gitterstruktur 45, die durch das Laserschmelzen hergestellt wird, ausgefüllt ist. Die Herstellung dieser Gitterstruktur 45 versteift das Bauteil 40 und verringert das Bauteilgewicht. Das in dem Teilvolumen 44 eingeschlossene Pulver des Pulverbettes, welches nicht aufgeschmolzen wurde, kann bei schwingender Beanspruchung aufgrund von Relativbewegungen das Dämpfungsverhalten des Bauteils 40 positiv beeinflussen.

In Figur 8 lässt sich erkennen, dass mit der Vorrichtung 25 zum Kaltgasspritzen das Formwerkzeug 38 analog zum Fertigungsschritt gemäß Figur 6 mit dem Material des Bauteils ausgefüllt wird. Dabei wird das Teilvolumen 45 in dem Bauteil eingeschlossen. Das auf diese Weise hergestellte Bauteil 40 ist damit durch eine Kombination aus thermischem Spritzen und additivem Herstellen im Pulverbett erzeugt worden.

Wie bereits erläutert wurde, kann auch das Formwerkzeug 38 durch eine Kombination der Verfahren des thermischen Spritzens sowie des additive Herstellen im Pulverbett erzeugt werden. Somit handelt es sich bei der Startschicht 34 um ein Teilvolumen 46 des Formwerkzeuges 38 gemäß Figur 5, welches anders als der Rest des Formwerkzeugs 38 durch das thermische Spritzverfahren hergestellt wurde.

Während in Figur 8 durch geeignete Schwenkwinkel von Bauplattform 13 und Vorrichtung 25 dafür gesorgt wird, dass eine Haftung zwischen Wandfläche 39 des Formwerkzeugs 38 und dem Material des Bauteils 40 ausgeschlossen ist (vgl. auch das zu Figur 5 Ausgeführte), wird gemäß Figur 9 mittels Kaltgasspritzen die abschließende Form des Bauteils 40 unter Einschluss des Gitters 45 fertiggestellt. Hierbei ist die Bauplattform 13 wieder horizontal und der Beschichtungsstrahl 31 vertikal ausgerichtet.

Der Figur 10 lässt sich entnehmen, wie das fertiggestellte Bauteil 40 mitsamt dem Formwerkzeug 38 von der Bauplattform 13 getrennt wird (beispielsweise durch Drahterodieren, nicht näher dargestellt). Zu erkennen ist in Figur 10, dass die Anbindungsstellen des Formwerkzeuges 38 lediglich aus den Streben 42 sowie dem Grat 32 bestehen, weswegen das Ablösen mit geringem Aufwand erreicht werden kann. Auch das anschließende Glätten der Bauplattform 13, die auf die Herstellung des nächsten Bauteils vorbereitet werden muss, wird dadurch vorteilhaft vereinfacht.

Um das Bauteil 38 zu entformen, ist wegen der Hinterschneidungen ein Zerstören des Formwerkzeugs erforderlich. Gemäß Figur 11 ist dargestellt, dass der Verbund aus dem Bauteil 40 und dem Formwerkzeug 38 in einen Behälter 47 mit einem Bad 48 eingebracht werden kann. Das Material des Formwerkzeuges 38 wird in diesem Bad 48 aufgelöst, wobei das Bauteil 40 durch das Bad nicht angegriffen wird. Dies könnte beispielsweise dadurch sichergestellt werden, dass das Formwerkzeug 38 aus einem unedlerem Metall hergestellt wird als das Bauteil 40. Alternativ zu einem Auflösen des Formwerkzeugs 38 kann dieses auch mechanisch zerstört werden. Insbesondere, da bei richtiger Führung des Beschichtungsstrahls 31 eine Haftung des Bauteils 40 am Formwerkzeug 38 ausgeschlossen oder zumindest minimiert werden kann, fallen die Teile des Formwerkzeugs 38 nach ihrer mechanischen Zerstörung von dem Bauteil 40 ab.

## Patentansprüche

1. Verfahren zum Herstellen eines Bauteils (40), bei dem das Bauteil (40) durch thermisches Spritzen mit einem Baumaterial führenden Beschichtungsstrahl (31) aufgebaut wird,
**dadurch gekennzeichnet,**
**dass**
• auf einer Bauplattform (13) ein Formwerkzeug (38) als verlorene Form für das herzustellende Bauteil (40) durch ein generatives Verfahren auf der Grundlage von das Formwerkzeug (38) beschreibenden Daten lagenweise erzeugt wird,
• das Bauteil (40) in dem Formwerkzeug (38) aufgebaut wird, indem das Formwerkzeug (38) durch das thermische Spritzen mit dem Baumaterial aufgefüllt wird und
• das Formwerkzeug (38) von dem Bauteil (40) durch Zerstören entfernt wird.

2. Verfahren nach Anspruch 1,
**dadurch gekennzeichnet,**
**dass** als thermisches Spritzen zum Herstellen des Bauteils (40) ein Kaltgasspritzen durchgeführt wird.

3. Verfahren nach einem der Ansprüche 1 oder 2
**dadurch gekennzeichnet,**
**dass** ein selektives Laserschmelzen und/oder ein selektives Lasersintern und/oder selektives Elektronenstrahlschmelzen als generatives Verfahren zum Herstellen des Formwerkzeugs (38) zum Einsatz kommt.

4. Verfahren nach einem der voranstehenden Ansprüche,
**dadurch gekennzeichnet,**
**dass** bei dem Herstellen des Bauteils das generative Erzeugen des Formwerkzeugs (38) abwechselnd mit dem Füllen des Formwerkzeugs (38) mit dem Baumaterial durchgeführt wird.

5. Verfahren nach einem der voranstehenden Ansprüche,
**dadurch gekennzeichnet,**
**dass** das Formwerkzeug (38) mit einer Versteifungsstruktur hergestellt wird, die aus Streben (42) besteht.

6. Verfahren nach Anspruch
**dadurch gekennzeichnet,**
**dass** die Streben (42) ein Fachwerk (41) bilden.

7. Verfahren nach einem der voranstehenden Ansprüche,
**dadurch gekennzeichnet,**
**dass** das Baumaterial an einer Wandfläche (41) des Formwerkzeugs mit einer derartigen Richtung des Beschichtungsstrahls (31) auf das in Entstehung befindliche Bauteil (40) aufgebracht wird, dass diese Richtung bezogen auf eine zu beschichtende Oberfläche des in Entstehung befindlichen Bauteils (40) innerhalb eines für das thermische Spritzen gegebenen Spritzkegels und bezogen auf die Wandfläche (39) außerhalb des für das thermische Spritzen gegebenen Spritzkegels liegt.

8. Verfahren nach Anspruch
**dadurch gekennzeichnet,**
**dass** die Bauplattform (13) zur Veränderung der Richtung des Beschichtungsstrahls geschwenkt wird.

9. Verfahren nach einem der voranstehenden Ansprüche,
**dadurch gekennzeichnet,**
**dass** das generative Fertigungsverfahren auch verwendet wird, um ein Teilvolumen (44) des Bauteils (40) herzustellen.

10. Verfahren nach einem der voranstehenden Ansprüche,
**dadurch gekennzeichnet,**
**dass** das thermische Spritzverfahren auch verwendet wird, um ein Teilvolumen (46) des Formwerkzeugs (38) herzustellen.

11. Anlage zum Herstellen eines Bauteils (40), in der eine Vorrichtung für ein thermisches Spritzen von Baumaterial vorgesehen ist, wobei zusätzlich
• eine Bauplattform (13) für das herzustellende Bauteil (40) vorgesehen ist und
• eine Vorrichtung für ein generatives Verfahren zum lagenweisen Herstellen von Objekten auf der Grundlage von dieses Objekte beschreibenden Daten vorgesehen ist,
**dadurch gekennzeichnet,**
**dass** die Bauplattform (13) in einem Lager (14) derart beweglich gelagert ist, dass die Bauplattform (13) aus einer horizontalen Position in eine schräge Position schwenkbar ist.

12. Anlage nach Anspruch 11,
**dadurch gekennzeichnet,**
**dass** als Vorrichtung für das thermische Spritzen eine Vorrichtung (25) zum Kaltgasspritzen vorgesehen ist.

13. Anlage nach einem der Ansprüche 11 oder 12,
**dadurch gekennzeichnet,**
**dass** als Vorrichtung für das generative Verfahren zum lagenweisen Herstellen von Objekten auf der Grundlage von dies Objekte beschreibenden Daten eine Vorrichtung (25) zum selektiven Laserschmelzen und/oder zum selektiven Lasersintern und/oder zum selektiven Elektronenstrahlschmelzen vorgesehen ist.

14. Anlage nach einem der Ansprüche 11 bis 13,
**dadurch gekennzeichnet,**
**dass** die Vorrichtung für das thermische Spritzen in einem Lager (27) derart beweglich gelagert ist, dass diese Vorrichtung (13) axial verschiebbar und schwenkbar ist.

## Claims

1. Method for manufacturing a component (40) in which the component (40) is built up by thermal spraying with a coating jet (31) carrying building material,
**characterized**
**in that**
• a mold (38) as a lost mold for the component (40) to be manufactured is produced layer by layer on a building platform (13) by a generative process on the basis of data describing the mold (38),
• the component (40) is built up in the mold (38), in that the mold (38) is filled with the building material by thermal spraying and
• the mold (38) is removed from the component (40) by being destroyed.

2. Method according to Claim 1,
**characterized**
**in that** cold-gas spraying is carried out as the thermal spraying for manufacturing the component (40).

3. Method according to either of Claims 1 and 2,
**characterized**
**in that** selective laser melting and/or selective laser sintering and/or selective electron-beam melting are used as the generative process for producing the mold (38).

4. Method according to one of the preceding claims,
**characterized**
**in that**, when manufacturing the component, the generative production of the mold (38) is carried out alternately with the filling of the mold (38) with the building material.

5. Method according to one of the preceding claims,
**characterized**
**in that** the mold (38) is produced with a stiffening structure that consists of struts (42).

6. Method according to Claim
**characterized**
**in that** the struts (42) form a framework (41).

7. Method according to one of the preceding claims,
**characterized**
**in that** the building material is applied to the component (40) that is being created on a wall surface (41) of the mold with such a direction of the coating jet (31) that this direction lies within a spray cone provided for the thermal spraying with respect to a surface to be coated of the component (40) that is being created and outside the spray cone provided for the thermal spraying with respect to the wall surface (39).

8. Method according to Claim
**characterized**
**in that**, for changing the direction of the coating jet, the building platform (13) is pivoted.

9. Method according to one of the preceding claims,
**characterized**
**in that** the generative production process is also used to produce a partial volume (44) of the component (40).

10. Method according to one of the preceding claims,
**characterized**
**in that** the thermal spraying process is also used to produce a partial volume (46) of the mold (38).

11. Installation for manufacturing a component (40) in which a device for thermal spraying of building material is provided, while in addition
• a building platform (13) for the component (40) to be manufactured is provided and
• a device for a generative process for manufacturing objects layer by layer on the basis of data describing these objects is provided,
**characterized**
**in that** the building platform (13) is movably mounted in a bearing (14) in such a way that the building platform (13) is pivotable from a horizontal position into a sloping position.

12. Installation according to Claim 11,
**characterized**
**in that** a device (25) for cold-gas spraying is provided as the device for thermal spraying.

13. Installation according to either of Claims 11 and 12,
**characterized**
**in that** a device (25) for selective laser melting and/or for selective laser sintering and/or for selective electron-beam melting is provided as the device for the generative process for manufacturing objects layer by layer on the basis of data describing these objects.

14. Installation according to one of Claims 11 to 13,
**characterized**
**in that** the device for thermal spraying is movably mounted in a bearing (27) in such a way that this device (13) is axially displaceable and pivotable.

## Revendications

1. Procédé de fabrication d'une pièce (40), dans lequel on constitue la pièce (40) par pulvérisation thermique, par un faisceau (31) de revêtement d'un matériau de constitution,
**caractérisé en ce que**
• on produit, couche par couche, sur une plateforme (13) de constitution, un outil (38) de formage, sous la forme d'un moule perdu pour la pièce (40) à fabriquer, par un procédé génératif sur la base de données décrivant l'outil (38) de formage,
• on constitue la pièce (40) dans l'outil (38) de formage en remplissant l'outil (38) de formage du matériau de constitution par la pulvérisation thermique et
• on élimine, par destruction, l'outil (38) de formage de la pièce (40).

2. Procédé suivant la revendication 1
**caractérisé**
**en ce que** l'on effectue une pulvérisation au gaz froid, comme pulvérisation thermique pour la fabrication de la pièce (40).

3. Procédé suivant la revendication 1 ou 2,
**caractérisé**
**en ce que** l'on met en œuvre une fusion laser sélective et/ou un frittage laser sélectif et/ou une fusion par faisceau d'électrons, comme procédé génératif de fabrication de l'outil (38) de formage.

4. Procédé suivant l'une des revendications précédentes,
**caractérisé**
**en ce que**, lors de la fabrication de la pièce, on effectue la production générative de l'outil (38) de formage, en alternance avec le remplissage de l'outil (38) de formage du matériau de constitution.

5. Procédé suivant l'une des revendications précédentes,
**caractérisé**
**en ce que** l'on fabrique l'outil (38) de formage ayant une structure de rigidification constituée d'entretoises (42).

6. Procédé suivant la revendication 5,
**caractérisé**
**en ce que** les entretoises (42) forment un treillis (41).

7. Procédé suivant l'une des revendications précédentes,
**caractérisé**
**en ce que** l'on dépose, sur la pièce (40) se trouvant en création, le matériau de constitution, sur une surface (41) de paroi de l'outil de formage, en ayant une direction du faisceau (31) de revêtement telle que cette direction, rapportée à une surface à revêtir de la pièce (40) se trouvant en création, se trouve à l'intérieur d'un cône de pulvérisation donné pour la pulvérisation thermique, et rapportée à la surface (39) de paroi, à l'extérieur du cône de pulvérisation donné pour la pulvérisation thermique.

8. Procédé suivant la revendication,
**caractérisé**
**en ce que** l'on fait pivoter la plateforme (13) de constitution pour modifier la direction du faisceau de revêtement.

9. Procédé suivant l'une des revendications précédentes,
**caractérisé**
**en ce que** l'on utilise aussi le procédé de fabrication génératif pour fabriquer des volumes (44) partiels de la pièce (40).

10. Procédé suivant l'une des revendications précédentes,
**caractérisé**
**en ce que** l'on utilise aussi le procédé de pulvérisation thermique pour fabriquer des volumes (46) partiels de l'outil (38) de formage.

11. Installation de fabrication d'une pièce (40), dans laquelle est prévu un dispositif de pulvérisation thermique de matériau de constitution, dans laquelle, en outre,
• il est prévu une plateforme (13) de constitution de la pièce (40) à fabriquer et
• il est prévu un dispositif pour un procédé génératif de fabrication couche par couche d'objets sur la base de données décrivant ces objets,
**caractérisée**
**en ce que** la plateforme (13) de constitution est montée mobile dans un palier (14), de manière à ce que la plateforme (13) de constitution puisse pivoter d'une position horizontale à une position inclinée.

12. Installation suivant la revendication 11,
**caractérisée**
**en ce qu'**il est prévu, comme dispositif de pulvérisation thermique, un dispositif (25) de pulvérisation au gaz froid.

13. Installation suivant l'une des revendications 11 ou 12,
**caractérisée**
**en ce qu'**il est prévu, comme dispositif pour le procédé génératif de fabrication couche par couche d'objets, sur la base de données décrivant ces objets, un dispositif (25) de fusion laser sélectif et/ou de frittage laser sélectif et/ou de fusion sélective par faisceaux d'électrons.

14. Installation suivant l'une des revendications 11 à 13,
**caractérisée**
**en ce que** le dispositif pour la pulvérisation thermique est monté mobile dans un palier (27), de manière à ce que ce dispositif (13) puisse être déplacé axialement et puisse pivoter.
